# EUROPEAN PATENT APPLICATION

(11) **EP 4 683 359 A1**
(43) Date of publication of application: **21.01.2026**
(21) Application number: 24382767.2
(22) Date of filing: 16.07.2024
(51) Int. Cl.: H04W 8/18, H04W 8/20, H04W 88/06

(54) **METHOD FOR CONTROLLING COMMUNICATION WITH MULTIPLEXED PROFILES**

(71) Applicant: Giesecke+Devrient Mobile Security Germany GmbH, 81677 München (DE)
(72) Inventor: PATIÑO, David, 08820 El Prat de Llobregat (Barcelona) (ES); GIFRE, Clara, 08820 El Prat de Llobregat (Barcelona) (ES); RUAU, Federico, 08820 El Prat de Llobregat (Barcelona) (ES); GARRIDO, Jose Antonio, 08820 El Prat de Llobregat (Barcelona) (ES)
(74) Representative: LKGLOBAL Partnerschaftsgesellschaft mbB

(57) **Abstract**

The present invention relates to a method for controlling communication with multiplexed subscriber profiles, comprising the steps of activating a plurality of subscriber profiles, each being configured to enable mobile network communication via a first communication interface of a host terminal and to access a terminal resource of the host terminal. Activating a subscriber profile comprises determining if a parameter value of a common parameter of at least two subscriber profiles are in conflict to one another. The parameter relates to accessing the terminal resource, and resolving the parameter conflict, in response to determining a parameter value conflict.

## Description

The present invention relates to a method for controlling communication with multiplexed communication profiles, specifically subscriber profiles, between a host terminal and a secure module. Specifically, it involves managing eSIM profiles that engage with an NFC interface.

### BACKGROUND OF THE INVENTION

User profiles, specifically eSIM profiles, comprise vital information such as network settings, access permissions, and personalized configurations. Efficient and robust access control of multiple activated profiles is crucial for seamless interactions between a secure module and other device hardware modules.

The secure module can comprise Multiple Enabled Profiles (MEP), which are defined by the GSMA's SGP.22 specification v3.0 and later. MEP allows multiple profiles to be active simultaneously on a single eSIM. This capability is crucial for devices that need to support multiple network operators or services without the need for multiple physical SIM cards.

In addition the SGP.22 specification v3.0 outlines the technical framework for enabling multiple profiles on eSIMs. This can include several methods to multiplex the contact interface, effectively creating multiple "eSIM Ports". These eSIM ports allow different profiles to interact with the device's hardware independently and can facilitate seamless switching and management of profiles. Key features include enhanced communication between the eSIM and the device, e.g. by means of an APDU API, better management and tracking of device changes, e.g., by means of a Device Change and Information Code. Additionally, local profile management capabilities can be improved by implementing an LPA API and Proxy. Also, multiple Subscription Manager Data Preparation (SM-DP) systems can be supported.

While SGP.22 v3.0 addresses the multiplexing of contact interfaces, contactless multiplexing falls under the purview of ETSI TS 102 221 v17.2.0 and later. This specification introduces the MANAGE LSI (Logical Secure Interface) command, which allows for the management of multiple logical secure modules within a single UICC (Universal Integrated Circuit Card).

The MANAGE LSI command can facilitate enabling multiple logical interfaces, ensuring that each profile can be managed independently without interference. However, the contactless interface access is limited to a single profile at a time. While multiple profiles can be enabled and managed, only one profile may interact with the contactless interface at any given moment. This can restrict applications requiring contactless interactions, such as NFC payments or access control, to only be associated with a single active profile. Other enabled profiles can effectively be cut off from the contactless interface, limiting their functionality in scenarios where contactless communication is essential.

The present invention aims to provide an enhanced device resource access by allowing multiple enabled profiles to coexist and operate seamlessly. This can involve conflict resolution mechanisms and implementing routing rules . In particular, a plurality of subscriber profiles can seamlessly connect to a contactless interface, in particular without deactivating profiles that may at a specific instance not access the contactless interface.

According to a first aspect, the present invention relates to a method for controlling communication with multiplexed profiles. The method can comprise the step of activating a plurality of subscriber profiles. Each subscriber profile of the plurality of subscriber profiles can be configured to enable mobile network communication via a first communication interface of a host terminal, and/or configured to access a terminal resource of the host terminal.

Activating a subscriber profile may comprise determining if a parameter value of a common parameter of at least two subscriber profiles are in conflict to one another, wherein the parameter relates to accessing the terminal resource, and resolving the parameter conflict, in response to determining a parameter value conflict.

The subscriber profile can comprise profile data relating to a mobile device information, a subscriber of a mobile network, an MNO, a mobile network, and/or a connection to the mobile network. The profile data can comprise data generally stored on a mobile device, preferably in an infrastructure or a device component, e.g., a routing module, relating to a connecting process to the mobile network. The device component can be a SIM card, e.g., an eSIM, a UICC, an eUICC, and/or an iUICC or any other future SIM type. Preferably, the profile data relates to a specific profile or parts of a profile to be stored on the SIM card. Thereby, the profile data can enable specific services on the mobile device.

The profile data can be eSIM profile data relating to an eSIM profile for a user device, in particular an eUICC of the user device and/or an eSIM profile template for a user device or a plurality of user devices. Further, the profile data can relate to eSIM application management data, specifically instructions. The profile data can be an eUICC information set (EIS) which can preferably comprise all eUICC related information (EID, ICCID, etc.) or a subset thereof.

The first communication interface can be a mobile network communication Interface. The interface can be part of the host terminal and can be configured to facilitate communication with a mobile network. This is typically the cellular radio interface used by the eSIM to connect to mobile networks.

The terminal resource can preferably be a short-range communication interface, preferably a Near Field Communication (NFC) interface, of the host terminal, which allows for short-range communication between the terminal and other short-range communication enabled devices.

Activating the plurality of subscriber profiles can involve enabling multiple eSIM profiles within the host terminal, specifically within the eUICC. Each profile can be configured to enable mobile network communication via the first communication interface.

According to an embodiment, the method can comprise activating a first subscriber profile, e.g., an initial or primary profile. The first subscriber profile can be a profile of the plurality of subscriber profiles. The method can comprise activating a second subscriber profile of the plurality of subscriber profiles. Activating the second profile can be subsequent to the activation of the first subscriber profile. Activating the second profile can comprise checking for conflicts in parameters with the first profile.

Alternatively, a set of profiles can be activated simultaneously, i.e., no previous profile may be activated. The method can comprise checking whether any of the profiles to be activated are in conflict to at least one other profile, in particular before activating a profile. When a conflict is detected, a resolution procedure can be performed. The conflict resolution can generally be performed between activated profiles and to be activated profiles. For example, a plurality of conflict free profiles may be activated and at least one additional profile is to be activated for which a conflict with the existing activated profiles can arise. Additionally or alternatively, a plurality of profiles can be activated, and the conflict can be detected between the profiles to be activated.

It can be required that each profile, each application of the profile, each parameter value of the profile is unique with respect to the further activated profiles and/or the further to be activated profiles. The method can comprise determining that each parameter value, in particular each parameter value accessible by the host terminal and/or a resource of the host terminal is unique. Thereby, an unambiguous communication can be guaranteed. For example, the common parameter can be an application identifier AID, where each application of each profile to be activated can be required to be unique such that the terminal resource can unambiguously communicate with the application of a designated target application of a predetermined profile. A parameter value conflict can arise between at least two profiles. The conflict may relate to a plurality of profiles, in particular when at least two profiles of the plurality of profiles comprise an application having an identical AID.

For example, the profile, e.g., the eSIM, interacting with the terminal resource, e.g., an NFC interface, may involve a plurality of applications that can be accessed and managed. Each application on the eSIM has an Application Identifier (AID), which is used to uniquely identify it. However, in some cases, these AIDs may not be unique, leading to potential conflicts.

With non-unique AIDs across a plurality of profiles, the terminal resource may struggle to determine which application to interact with. This can lead to errors, or the wrong application being accessed. The NFC interface may use an application selection process to identify and communicate with the correct application and also the correct profile. If AIDs are not unique, the selection process can fail, causing the NFC interface to either select the wrong application or fail to establish a connection.

This can also create a security risk If the NFC interface inadvertently accesses the wrong application, sensitive data might be exposed and/or unauthorized actions might be performed.

According to a further embodiment, the method can comprise failing an activation of the subscriber profile comprising a conflicting parameter in response to determining a conflicting parameter in a further activated subscriber profile.

When a conflict is determined a basic resolution strategy can be to not activate the profile creating the conflict. This can achieve the advantage that each profile that is activated is compatible with already activated profiles. Alternatively, the profile may be activated and access to the conflicting application of the profile can be prevented. Thereby, an already activated profile may take precedent when conflicting parameters, e.g., conflicting applications, exist. Thereto, the method can comprise selectively routing communication according to determined conflicts. This can comprise that although a profile may be activated a specific conflicting application of the profile may intently not receive any communication, in particular as another application may take priority.

The conflict resolution can conform to the GlobalPlatform Amendment C (GP Amd C) standard. Thereto, the method may comprise treating a card-emulation application of a subscriber profile as a regular application activation. This can correlate to a SET STATUS command enabling a list of applications.

Failing the activation of the subscriber profile can be performed when a conflict arises during the profile enable command. Failing the activation can comprise reporting the conflict, in particular in a manner akin to the SET STATUS command. This can achieve the advantage that conflicts are promptly identified and addressed.

In a further beneficial embodiment, the method can comprise providing access to the terminal resource to one of the subscriber profiles according to routing data. The routing data can define a priority rank of the subscriber profiles.

The routing data can comprise a preference and/or hierarchy information pertaining to the profiles comprising the conflicting parameter values. Based on the routing data unambiguous communication profiles can be established such that any activated profile and/or application may receive correspondingly intended communications. When a communication is performed involving the conflicting parameter, the routing data may define a profile application that takes precedent or abort the communication. Preferably, any conflict between profiles is resolved during activation, i.e., as a pre-emptive measure to avoid conflicts in use of the host terminal. Alternatively, the method can comprise monitoring communication between subscriber profiles and terminal resources and determining when an ambiguous routing is created. An ambiguous routing can comprise a communication that according to its parameters values is designated to more than one subscriber profile. Thereto, the method can comprise performing a conflict resolution according to the routing data, in particular such that the conflict can be resolved automatically.

The priority rank can determine which profile of a set of profiles, respectively which profile application of a set of profile applications, having conflicting parameter values will be the receiver of a communication relating to a terminal resource. Thereto, the priority rank may also define subsequent ranks, e.g., secondary, tertiary and further ranks of profiles to be considered as a receiver of the communication. For example, when a subscriber profile having the primary rank to communicate is deactivated the communication may be received by the secondary priority rank application.

Providing access according to the routing data can be performed based on conflict resolution by a secure module, e.g., a Trusted Execution Environment (TRE). Providing access can comprise prioritizing either the to be activated profile or an existing activated profile. Further, prioritizing can relate to individual applications. In case of a conflict, the application with lower priority is disabled, ensuring the new profile can be enabled regardless of conflicts.

The routing data can comprise routing rules for handling conflicting AIDs. The routing rules can be a list of rules, each specifying an AID pattern and the corresponding route (eSIM Port) to apply. The method can comprise selecting, in particular through the contactless interface, an AID and iterating through the list of rules, in particular by the TRE, to find a match. This can ensure that the correct application is selected and routed appropriately. Thereby, coexistence of multiple profiles, in particular of otherwise incompatible profiles, can be realized. Specifically, a deactivation and/or switching of profiles depending on a specific application can be avoided. According to a further embodiment, the method can comprise requesting routing data, in particular requesting in response to determining if a parameter value of a common parameter of at least two subscriber profiles are in conflict to one another.

Specifically, the method can comprise the step of requesting routing data from an external source and/or the host terminal. The routing data can be provided locally in advance. Additionally or alternatively, the routing data can be provided as part of the activation process. Preferably, a user input can comprise the routing data. The user can be prompted to provide routing data, such that the user decides which profile application takes priority when accessing the terminal resource. In response to requesting routing data, the method can comprise receiving routing data. The routing data can be provided by a remote management interface, in particular a remote management interface for secure modules. A remote management interface may resolve the conflicting profiles. Thereto, the method can comprise receiving updated profile data comprising modified parameter values, e.g. updated AIDs, to resolve the local conflict on the host terminal.

According to a further embodiment, the method can comprise generating the routing data in a secure module (eSIM), wherein the routing data comprises routing rules and each routing rule comprises a parameter value pattern and a communication route.

This can achieve the advantage that the secure module can independently manage conflicts between profiles and applications. Thereto, the method can comprise prioritizing either the new profile, the existing profiles, or individual applications, in particular by means of the TRE. Alternatively, the host terminal can comprise a routing module configured to generate the routing rules. Herein, the routing module can be external to the TRE. The new profile can be a profile to be activated of the plurality of profiles, the existing profile can be an already activated profile on the host terminal.

In a further embodiment, the method can comprise the step of monitoring subscriber profiles on the host terminal for conflicting parameter values.

Monitoring the activation of new profiles and checking for conflicts with existing profiles or applications can achieve the advantage that also arising conflicts due to profile updates can be detected. Specifically, a profile may already be activated and may receive an update that alters a parameter value such that the altered parameter value conflicts with another parameter value of a further activated profile. Monitoring can be performed by the TRE and/or the routing module. Additionally or alternatively, monitoring can be performed via a remote management interface, in particular of the TRE.

The priorities that are assigned to profiles and applications can be predefined or dynamically assigned based on user preferences or system policies. Herein priorities of the conflicting entities can be compared and evaluated. The routing data can comprise user-defined priorities such that applications and profiles can be prioritized manually. Additionally or alternatively, the routing data can comprise dynamically defined priorities such that priorities can be adjusted based on usage patterns or context.

The routing data can be deterministic such that for each potential conflict a priority route is defined. As a fall back, the routing data may define deactivation of the conflicting profile and/or disabling communication to the conflicting application. Preferably, the entity with the lower priority is disabled to ensure the higher-priority profile or application can be enabled.

If the conflict involves multiple applications, the lower-priority applications can be disabled individually.

Preferably, the routing rules can be used to manage cases where multiple profiles have contactless applications with the same or conflicting AIDs. These rules determine which application should be used based on a list of AID patterns and corresponding routes (eSIM Ports). When a contactless application is selected (implicitly or explicitly), the TRE can iterate through the rule list. The TRE can look for a match between the application's AID and the AID patterns in the rule list. Once a match is found, the TRE may apply the corresponding route (eSIM Port) to the application. If no match is found, a default route can be applied, or the application can be disabled. This can achieve correct routing of contactless applications based on predefined rules. Additionally, conflicts between applications with similar or identical AIDs can be prevented.

The routing data, e.g., the rule list, can be updated dynamically based on changes in profiles or applications. Additionally or alternatively, the users may define custom routing rules based on their preferences.

Alternatively, each application may define its own routing rules, in particular independent of the TRE. Thereby, authority of the routing and responsibility for correct routing lies with the respective application and/or profile.

According to a further aspect, the present invention relates to a host terminal for mobile network communication. The host terminal can comprise a secure module for multiple enabled profiles configured to activate a plurality of subscriber profiles enabling mobile network communication, in particular via a first communication interface, preferably of the host terminal. The secure module can further be configured to connect to a terminal resource, preferably of the host terminal. The secure module may comprise a routing module configured to determine if a parameter value of a common parameter of at least two subscriber profiles are in conflict to one another. The parameter may relate to accessing the terminal resource resolve the parameter conflict, when a parameter value conflict is determined.

Communication between the secure module and the terminal resource can be initiated by either component. Preferably, the communication is initiated by the terminal resource, in particular when the terminal resource is a near-field communication interface, e.g., an NFC interface. Thereto, the communication may be initiated when the NFC interface detects an NFC device. For example, coming into the vicinity of an NFC enabled device or being brought into reception distance of the NFC enabled device.

In a favourable embodiment, the host terminal can comprise a user interface module configured to capture a user input. The routing module can be configured to generate routing data according to the user input to provide a conflict resolution.

Thereby, the user can be offered a choice when conflicting applications and/or profiles arise to prioritize a specific application and/or prioritize a profile as a whole. The user interface module can be configured to communicate with the routing module. Thereto, the routing module can provide routing data to the user interface module. The user interface module may be configured to visualize a communication conflict, i.e., a parameter value conflict, according to the routing data. The user interface module can be configured to provide a plurality of selectable options to resolve the conflict. Herein, the provided options can be mutually exclusive.

In a further embodiment, the host terminal can comprise the terminal resource. The terminal resource can be configured to communicate with a near-field communication device, e.g., an NFC enabled card, preferably an identification card or banking card. The routing module can be configured to provide a communication channel between the terminal resource and the secure module, preferably according to the routing data, to enable access of the terminal resource to a corresponding application of a subscriber profile. The terminal resource can further be configured to access the secure module according to the routing data.

In this embodiment, the host terminal can be a smartphone, a mobile network-enabled car system, or any other device capable of mobile network communication, respectively any device comprising a secure module for communication, preferably an eSIM capable device. The terminal resource within this device can primarily be an NFC interface but can also be any other communication interface such as Bluetooth, Wi-Fi, or RFID. The terminal resource can be configured to enable secure, short-range communication between devices, typically within a few centimeters. This can benefit applications requiring quick and secure data exchange, such as contactless payments, access control, and/or data transfer.

For example, a user can tap their NFC-enabled banking card against their smartphone to make a payment using a mobile wallet application. Also, a driver can unlock and/or start their car by tapping their NFC-enabled smartphone or key against the car's door handle or dashboard. A further use case can be a user presenting a near-field communication enabled mobility card, i.e., a public transport related identification, subscription and/or payment card to a corresponding reader at a transportation terminal, e.g., when entering a public transport station and/or when entering a public transport.

The routing module can be responsible for establishing a communication channel between the terminal resource and the secure module. This channel is configured according to routing data, which dictates how the terminal resource accesses the secure module. The secure module may comprise sensitive information, such as cryptographic keys or personal data, and ensures that only authorized applications can access this information. When making a payment, the routing module can ensure that the NFC interface communicates securely with the secure element in the phone.

The host terminal device can further be a component of a smart home integration system. NFC can be used to control smart home devices. For example, tapping an NFC tag with a smartphone can turn on lights, adjust the thermostat, or unlock doors. A further application includes healthcare systems: Here NFC-enabled devices can be used for patient identification and to access medical records securely. A further application can relate to public transportation where NFC can be used for ticketing systems, allowing passengers to tap their phones or cards to pay for rides.

The mobile device can comprise a single link communication infrastructure between the terminal resource and the secure module. The single link can be configured to allow only a single communication session between the terminal resource and the secure module, i.e., only one subscriber profile, respectively only one application may interact with the terminal resource at any given time.

According to a further aspect the present invention relates to a server device for providing data to host terminal. The server device can be configured to provide a subscriber profile to the host terminal for enabling mobile network connectivity at the host terminal. Further, the server device can be configured to determine if a parameter value of a common parameter of at least two subscriber profiles are in conflict to one another.

The server device can be an SM-DP+ or any other initial profile providing entity. By enabling the server device to perform a conflict check, any conflict may be resolved prior to activating the corresponding profile. The server device can be configured to alter the profile to be activated to resolve any parameter conflict with other profiles, specifically already activated profiles. The server device may fail an activation of a profile or withhold a profile transfer to the host terminal if a conflict is detected.

The server device can be configured to provide a profile update to a subscriber profile activated at the host terminal. Further, the server device can be configured to determine if the profile update generates a parameter value conflict with another activated profile.

The server device can be an eSIM profile update providing entity, e.g., an eSIM OTA (Over-The-Air) server. The server device can facilitate remote download, activation, and management of subscriber profiles, e.g., eSIM profiles, on devices, in particular without the need for physical SIM cards. The server device can be configured for remote download of eSIM profiles to host terminals. This can include the initial provisioning of a new profile and updates to existing profiles.

Once downloaded, the server device can manage the activation of the subscriber profile, ensuring it is correctly installed and ready for use. The server device can also be configured to deactivate or delete profiles as needed, ensuring that only the necessary profiles are active on the device.

The server device can be configured to perform a conflict check ensuring that each application ID within multiplexed profiles remains unique. This can achieve correct routing of communication sessions to the correct application and profile. In scenarios where multiple profiles are active on a single secure device, the server can ensure that there is no overlap or conflict between application IDs. This can prevent ambiguity and ensures that each communication session is correctly routed. If a conflict is detected, the server can either automatically resolve it by assigning a new unique ID or issue a notification for manual intervention.

The server can be configured to compare an application IDs, respectively a plurality of application IDs, of the new profile with the IDs of existing profiles. If a duplicate ID is detected, the server device can be configured to flag this as a conflict. The server can automatically assign a new unique application ID to the new profile, ensuring no conflicts. Once the conflict check is complete and any conflicts are resolved, the server device can proceed with the activation of the new profile.

According to a further aspect the present invention relates to a mobile communication platform for communication with multiplexed profiles. The platform can comprise a server device configured to provide a subscriber profile to a host terminal, and/or a host terminal configured to receive the subscriber profile and enable mobile network connectivity according to the subscriber profile. The platform can further comprise a routing module configured to determine if a parameter value of a common parameter of at least two subscriber profiles are in conflict to one another.

Specifically, the routing module can be a separate entity with respect to the secure module. The routing module can be a component of the host terminal. Thereto, the routing module can act as an intermediary between the terminal resource and the secure module configured to provide unambiguous communication routing between the terminal resource and the secure module. Alternatively, the routing module can be a server-side entity configured to perform a conflict check, in particular as part of an activation process of a profile. Thereto, control over the routing module can lie with a mobile network operator. For example, when providing a profile for activation, the profile can be required to be compatible with already installed profiles prior to performing the activation.

According to a further aspect the present invention relates a computer program product, comprising a computer-readable medium bearing instructions executable by a host terminal capable of participating in a communication network. The instructions, when executed by the host terminal, cause the host terminal to perform steps of the method according to any embodiment of the above method.

According to a further aspect the present invention relates a computer-readable data carrier, comprising a non-transitory computer-readable medium; wherein the medium has stored there on a computer program according to the previous aspect. The computer program, when executed by a host terminal, can cause the host terminal to perform the method according to any embodiment of the above method.

Further aspects, features and advantages of the present invention will become apparent to those of ordinary skills in the art upon reviewing the following detailed description of preferred embodiments and variants of the present invention in conjunction with the accompanying figures.

### BRIEF DESCRIPTION OF THE DRAWINGS

Reference will now be made to the accompanying figures, in which
FIG. 1 shows a schematic representation of the method according to an embodiment of the present invention;
FIG. 2 shows a schematic representation of a communication platform according to an embodiment of the present invention; and
FIG. 3 shows a schematic representation of an aspect of a communication platform according to an embodiment of the present invention.

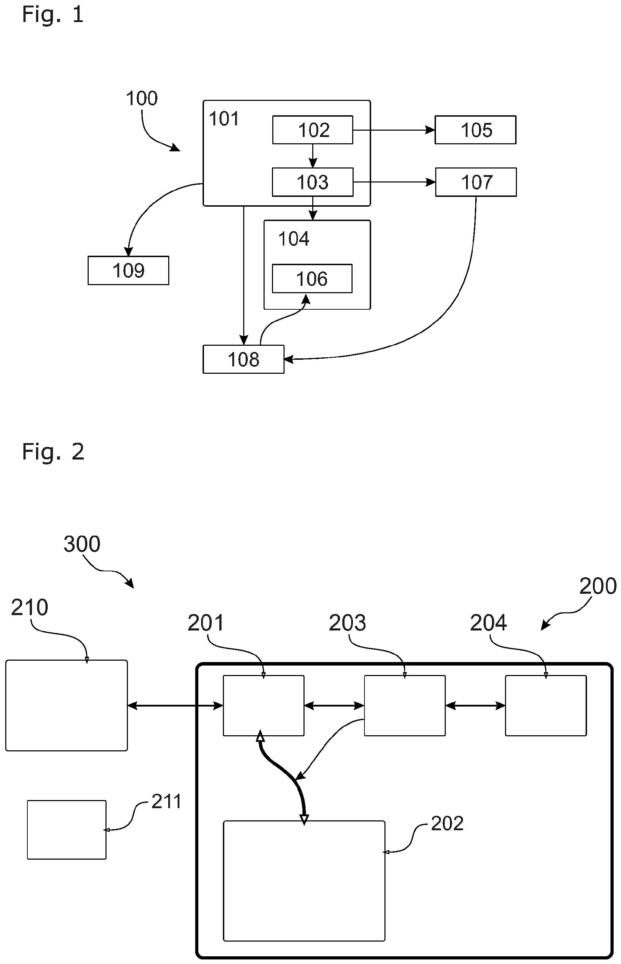

Fig. 1 depicts a combination of method steps according to an embodiment of the invention. The method 100 involves activating 101 subscriber profiles and determining 102 parameter conflicts, preferably as part of the activation process. The activation can be conditional on conflict free profiles, respectively a successful conflict resolution.

Resolving conflicts ensures that each profile, respectively each application of each profile, and each parameter value of the profile is unambiguous with respect to the other activated profiles and/or with respect to accessing the terminal resource.

The method can comprise providing 104 access to the terminal resource to activated profiles. One communication session directed at a specific application of a profile can be active. Conversely, multiple profiles enabled for terminal resource access can be activated.

Monitoring 108 subscriber profiles can include periodic evaluation or parameter change triggered evaluation of conflicts between subscriber profiles.

The method can involve requesting 107, receiving, and generating 108 routing data, in particular in the secure module (eSIM). The routing data comprises routing rules, and each routing rule comprises a parameter value pattern and a communication route. The routing data defines a priority rank of the subscriber profiles and helps manage cases where multiple profiles have contactless applications with the same or conflicting AIDs.

The method can comprise switching between activated profiles, i.e., the profile that has access to the terminal resource can be switched, without requiring the use of a MANAGE LSI command. Thereby, a disconnect of the corresponding profile to the terminal resource can be avoided. This can also avoid switching issues when changing the CLF connection from one profile to another on-the-fly. Specially, a delay can be avoided that may occur when activating the single wire protocol (SWP) interface and updating/ reinitializing the parameters registry with the new profile's settings.

Resolving 103 the parameter conflict can be performed in response to a failed profile activation. By way of illustration, when an ENABLE PROFILE command is executed, the card-emulation enabled applications of the new profile may undergo a process similar to SET STATUS to activate multiple card-emulation applications. When the activation of the complete profile or a specific application fails, the conflict resolution can be triggered, i.e., the ENABLE PROFILE command failed. Thereto, the method can comprise initially failing 105 an activation of a profile. Failing 105 can also be performed should resolving 103 the parameter conflict not result in unambiguous routing. When specific routing data is required, providing 106 access to the terminal resource can adhere to the determined routing.

Alternatively, the secure module can perform conflict resolution 103 during the ENABLE PROFILE command to ensure the profile can be enabled regardless of conflicts. A priority according to the routing data can be established.

Conflict free routing can be achieved by maintaining a list of rules, each with an AID pattern and the corresponding route (eSIM Port) to apply. Upon implicit or explicit selection through the contactless interface, the secure module can iterate through the rule list to find a match.

Implementing routing rules within the secure module, can resolve AID conflicts by directing traffic based on predefined patterns and routes. This can ensure that the correct profile and application are selected during contactless interactions.

Fig. 2 shows a schematic representation of a mobile communication platform 300 for communication with multiplexed profiles. The mobile communication platform 300 is configured to enable communication of a host terminal 200 having multiplexed activated profiles, where each profile is enabled to establish communication sessions with a terminal resource 201. The host terminal 200 can comprise a secure module 201 responsible for managing multiple enabled profiles. It can activate a plurality of subscriber profiles each having a set of applications. Each application can access the terminal resource 202, respectively receive a communication request.

The link between the secure module 201 and the terminal resource 202 can be a single communication interface, specifically capable of a single communication session linking a specific application of a subscriber profile with the terminal resource 202. Herein, the route between terminal resource 201 and profile application can be determined by an unambiguous application ID.

The routing module 203 determines if there is a conflict in the parameter values of a common parameter among at least two subscriber profiles. The parameter preferably relates to accessing the terminal resource 202. If a conflict is detected, the routing module 203 resolves it. For each communication session between the secure module 201 and the terminal resource 202, the routing module 203 can determine a specific route, determining the endpoint, i.e., which profile and which app shall receive data from the terminal resource 202. Thus, the routing module 203 can control a communication channel between the terminal resource 202 and the secure module 201. The communication channel can preferably be an SWP channel. In a further advantageous embodiment the routing module 203 can control a plurality of communication channels, e.g., four channels in an SWP interface. The routing rules can define a specific communication channel to between the terminal resource and a profile.

A first contact interface of the terminal resource, e.g., a contact interface configured to capture a near-field communication, can be oblivious to the presence of multiple activated profile, i.e., contactless multiplexion. A second interface of the terminal resource configured to provide data captured from the near-field communication, can be aware of multiple activated profiles and can be configured to process a communication route to a profile according to the routing data, i.e., provide the data to a corresponding application identified by an AID as defined by the routing data.

Conflict resolution can preferably be performed prior to activating the profile by the routing module 203. The routing module can be a separate instance in the host terminal 200 separate from the secure module 201. Resolving an ambiguity can depend on a user interaction, such that a preference is given for one application of two conflicting applications. Thereto, the user interface module 204 can capture a user input pertaining to a decision which route communication route to set.

The server device 210 can provide a subscriber profile to the host terminal 200 and may also determine if there is a conflict in the parameter values of a common parameter among at least two subscriber profiles. Specifically, the server device 210 may check a profile to be provided to the host terminal 200 in reference to profiles already activated at the host terminal 200. Additionally or alternatively, the server device 210 can provide profile updates to an activated subscriber profile at the host terminal 200. Thereto, the server device 210 can determine if the update generates a parameter value conflict with another activated profile and initiate a conflict resolution accordingly.

The platform 300 can comprise a separate routing component 211, which can also be part of the server device 210 and is responsible for providing conflict free routing, in particular by determining routing data when conflicting parameter values are detected. The routing component 211 can be redundant to the routing module 203 at the host terminal 200. Alternatively, the routing component 211 and the routing module 203 can be provided mutually exclusive.

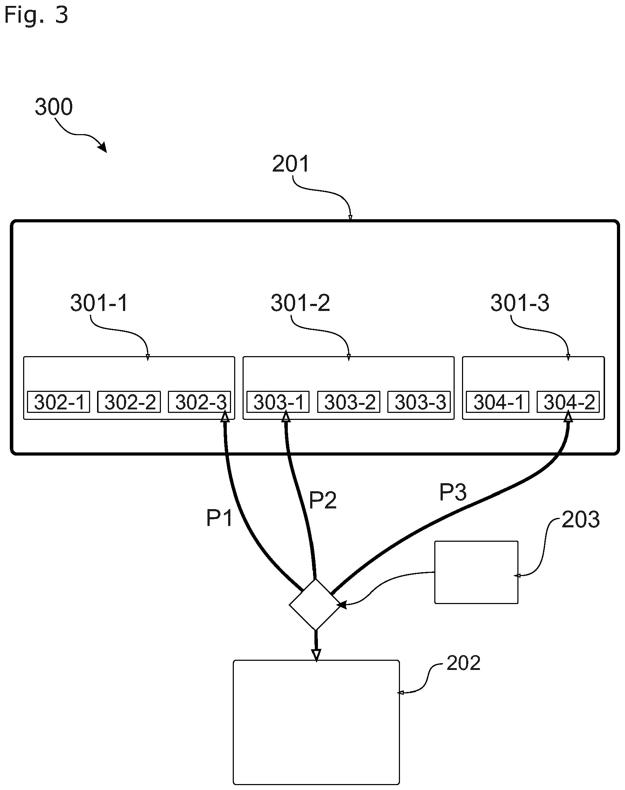

Fig. 3 shows a schematic representation of an aspect of the communication platform 300 comprising the secure module 201, the routing module 203 and the terminal resource 202. The secure module 201 can comprise a plurality of activated subscriber profiles 301-1, 301-2, 301-3. Each profile can comprise a plurality of applications 302-1, 302-2, 302-3; 303-1, 303-2, 303-3; 304-1, 304-2. Each application can be identified by an AID. The AIDs are not necessarily unique across profiles. Each profile 301-1, 301-2, 301-3, respectively at least one application 301-3, 303-1, 304-2 can be configured to access the terminal resource 202, respectively receive a communication from the terminal resource 202.

The routing module 203 can be configured to resolve a communication route ambiguity by determining a priority for the applications 302-3, 303-1, 304-2. An application 302-3 having priority P1 over the remaining applications 303-1, 304-2 may receive any communication labelled with the specific AID. The application 303-1 having a lower priority P2 may receive corresponding communications when the priority P1 application 301-3 is not available, not activated and/or does not receive or respond to the communication. The routing module 203 can be configured to determine the priorities P1, P2, P3 upon activation of a corresponding profile. Advantageously, the priority order may not depend on the sequence of activation, but preferably on user preference, or host terminal settings.

## Claims

1. Method (100) for controlling communication with multiplexed subscriber profiles, comprising
activating (101) a plurality of subscriber profiles, wherein each subscriber profile of the plurality of subscriber profiles is configured to:
enable mobile network communication via a first communication interface of a host terminal; and
access a terminal resource of the host terminal,
wherein activating (101) a subscriber profile comprises
determining (102) if a parameter value of a common parameter of at least two subscriber profiles are in conflict to one another, wherein the parameter relates to accessing the terminal resource, and
resolving (103) the parameter conflict, in response to determining a parameter value conflict.

2. The method (100) according to claim 1, comprising the step of
providing (104) simultaneous access to the terminal resource to activated subscriber profiles, in particular such that any activated subscriber profile is accessible by the terminal resource .

3. The method (100) according to any one of the preceding claims, comprising the step of
failing (105) an activation of the subscriber profile comprising a conflicting parameter in response to determining a conflicting parameter in a further activated subscriber profile.

4. The method (100) according to any one of the preceding claims, comprising the step of
providing (106) access to the terminal resource to one of the subscriber profiles according to routing data, wherein the routing data defines a priority rank of the subscriber profiles.

5. The method (100) according to claim 4, can comprise the step of
requesting (107) routing data in response to determining if a parameter value of a common parameter of at least two subscriber profiles are in conflict to one another.

6. The method (100) according any one of the preceding claims, comprising the step of
generating (108) the routing data, wherein the routing data comprises routing rules and each routing rule comprises a parameter value pattern and a communication route.

7. The method (100) according any one of the preceding claims, comprising the step of
monitoring (109) subscriber profiles on the host terminal for conflicting parameter values.

8. A terminal device (200) for mobile network communication, comprising,
a secure module (201) for multiple enabled profiles configured to:
activate a plurality of subscriber profiles enabling mobile network communication; and connect to a terminal resource (202);
a routing module (203) configured to:
determine if a parameter value of a common parameter of at least two subscriber profiles are in conflict to one another, wherein the parameter relates to accessing the terminal resource (202); and
resolve the parameter conflict, when a parameter value conflict is determined.

9. The terminal (200) device according to claim 8, comprising
a user interface module (204) configured to capture a user input;
wherein the routing module (203) is configured to generate routing data according to the user input to provide a conflict resolution.

10. The terminal device (200) according to claim 9, comprising the terminal resource configured to communicate with a near-field communication device,
wherein the routing module (203) is configured to provide a communication channel between the terminal resource (202) and the secure module (201) according to the routing data to enable access of the terminal resource (202) to a corresponding application of a subscriber profile, and wherein the terminal resource (202) is further configured to access the secure module (201) according to the routing data.

11. A server device (210) for providing data to a host terminal (200) configured to:
provide a subscriber profile to the host terminal (200) for enabling mobile network connectivity at the host terminal (200);
determine if a parameter value of a common parameter of at least two subscriber profiles are in conflict to one another.

12. The server device (210) according to claim 10, configured to:
provide a profile update to a subscriber profile activated at the host terminal (200); and
determine if the profile update generates a parameter value conflict with another activated profile.

13. A mobile communication platform (300) for communication with multiplexed profiles, comprising:
a host terminal (200) configured to receive the subscriber profile and enable mobile network connectivity according to the subscriber profile;
a server device (210) configured to provide a subscriber profile to the host terminal (200);
a routing component (211) configured to determine if a parameter value of a common parameter of at least two subscriber profiles are in conflict to one another, wherein the parameter relates to accessing the terminal resource; and
resolve the parameter conflict, when a parameter value conflict is determined.

14. A computer program product, comprising:
a computer-readable medium bearing instructions executable by a host terminal capable of participating in a communication network,
wherein the instructions, when executed by the host terminal, cause the host terminal to perform steps of the method according to any one of claims 1 to 7.

15. A computer-readable data carrier, comprising a non-transitory computer-readable medium; wherein the medium has stored there on a computer program according to claim 14; wherein the computer program, when executed by a host terminal, causes the host terminal to perform the method according to any one of claims 1 to 7.
